# EUROPEAN PATENT SPECIFICATION

(11) **EP 0 468 368 B1**
(45) Date of publication and mention of the grant of the patent: **12.04.1995**
(21) Application number: 91112028.5
(22) Date of filing: 18.07.1991
(51) Int. Cl.: H02G 7/00

(54) **Improved device for automatically placing, by means of helicopters, marker balls on aerial lines, particularly power lines**
Verbesserte Einrichtung zur automatischen Montage von Warnkugeln mit Hubschraubern auf Freileitungen, insbesondere Leitungen unter hoher Spannung
Dispositif amélioré pour placer automatiquement, par hélicoptères, des boules de balisage sur des lignes aériennes, en particulier des lignes haute tension

(30) Priority: 25.07.1990 IT 6758590
(43) Date of publication of application: 29.01.1992
(73) Proprietor: Jans, Donato, I-11026 Pont Saint Martin (Aosta) (IT)
(72) Inventor: Jans, Donato, I-11026 Pont Saint Martin (Aosta) (IT)
(74) Representative: Modiano, Guido, Dr.-Ing.

(56) References cited:
- US-A- 3 430 325

## Description

The present invention relates to an improved device for automatically placing, by means of helicopters, marker balls on aerial lines such as power lines, mountain telferage lines, cableways and the like.

US-A-3,430,325 discloses an apparatus for placing a single pair of hemispheres around an aerial line and for joining the hemispheres to form a marker ball.

European Patent Application No. 0 418 751, by the same Applicant, discloses a device for automatically placing marker balls by means of hovering helicopters and forms part of the prior art within the meaning of Article 54(3) EPC.

Said device, hereinafter referred to as the "known device", substantially comprises a structure which is intended to be suspended from a helicopter and has at least two facing magazines, each of which is suitable for containing and distributing a respective stack of hemispheres for composing and placing a plurality of marker balls.

Below the magazines there are means for installing the hemispheres, which comprise fluid-activated elements which are adapted for compressing the hemispheres together, which are arranged facing each other beforehand, so as to mutually connect them and close them on the cable on which they must be placed.

In said known device, the magazines have, in their lower portion, respective tapered funnel-shaped regions which terminate with respective facing distribution channels. In the tapered funnel-shaped regions, the hemispheres, being affected by gravity, turn over by 90°, by virtue of the combined action of controlled retention elements, and become arranged in facing pairs in respective distribution channels, where they are engaged by the fluid-activated elements which connect them to one another and place them on an aerial cable or power line; said cable is arranged in a central opening which separates the distribution channels.

In the above specified known device, the descent of the hemispheres into the distribution channels through the tapered regions and their 90° overturning are entrusted entirely to the action of gravity. The relatively low weight of the hemispheres, which are constituted by a hollow half-shell made of polymeric material with terminal sleeves, and the relative convolution of the descent path, can cause jammings and the consequent unwanted interruption of the placement work.

The aim of the present invention is essentially to eliminate this disadvantage and other inconveniences encountered in the use of the known types of marker-ball placement devices.

According to the invention, this aim as well as other objects of the invention which will become apparent hereinafter are achieved by a device as defined in the appended claims.

Advantageously, according to one important aspect of the invention, there is provided an improvement which consists in eliminating the tapered regions and the distribution channels arranged below the magazines and in using active means for the extraction, placement and mutual connection of the hemispheres stacked in the respective magazines.

According to an embodiment of the present invention, said active means are constituted by first pairs of oscillating fluid-activated grip jacks, for the actuation of elements for gripping the respective sleeves of each hemisphere, which cooperate with second pairs of coaxial pusher jacks; the pairs of coaxial jacks rotate in opposite directions after retracting the stems, in order to turn over the gripped hemispheres and arrange them facing one another and connect them by pressing one against the other by virtue of the subsequent controlled extension of the pusher jacks upon releasing the grip jacks.

Further characteristics and advantages will become apparent from the following detailed description and with reference to the accompanying drawings, given by way of non-limitative example, wherein:

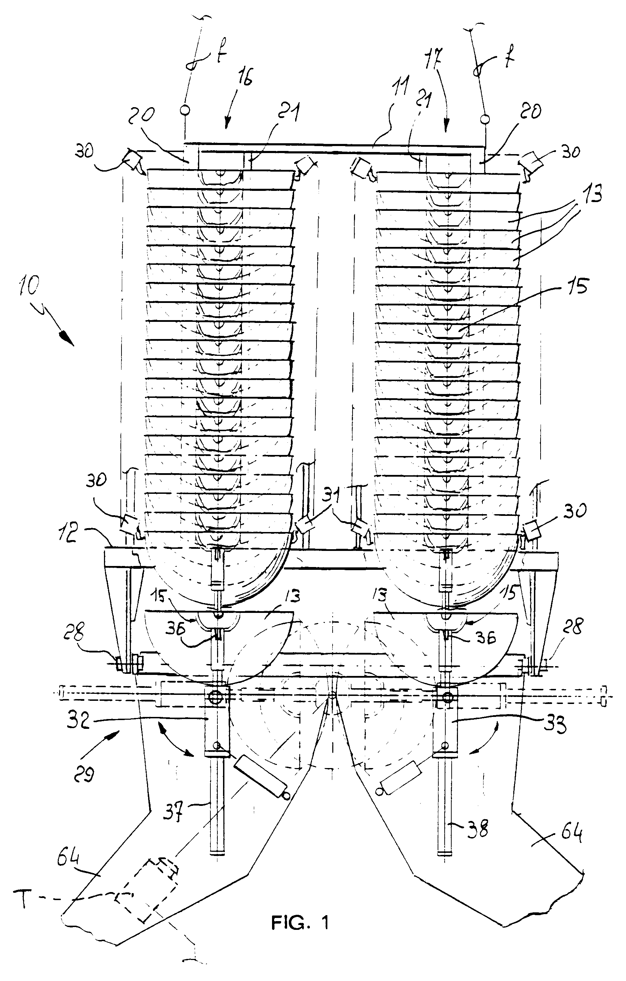

figure 1 is a partially sectional elevation view of the improved device;

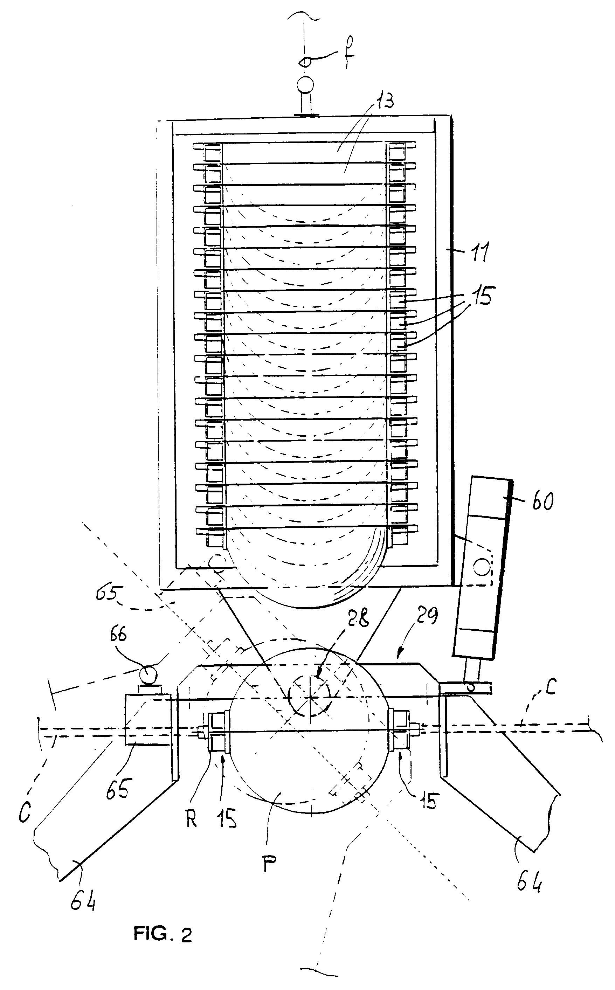

figure 2 is an elevation view, rotated by 90° with respect to the view of figure 1, of the device without the active means for extraction, placement and mutual connection;
figure 3 is an enlarged-scale detail view of figure 1;
figure 4 is an enlarged-scale view of a further detail of figure 1;
figure 5 is a partially sectional view of the active elements for extraction, placement and mutual connection of the marker ball hemispheres;
figure 6 is a view rotated by 90° with respect to the view of figure 5.

In the drawings, the reference numeral 10 generally indicates the improved device, which comprises a metallic cage-like structure 11, with a base frame 12, which is intended to be suspended, in a per se known manner by means of cables "f", from the barycentric hook of a helicopter in the manner described in the above mentioned prior patent application.

Flanking magazines 16,17 are defined in the structure; each is intended to contain a respective stack of hemispheres 13 which are suitable for composing the balls by juxtaposition; each hemisphere comprises opposite semi-cylindrical sleeves 15.

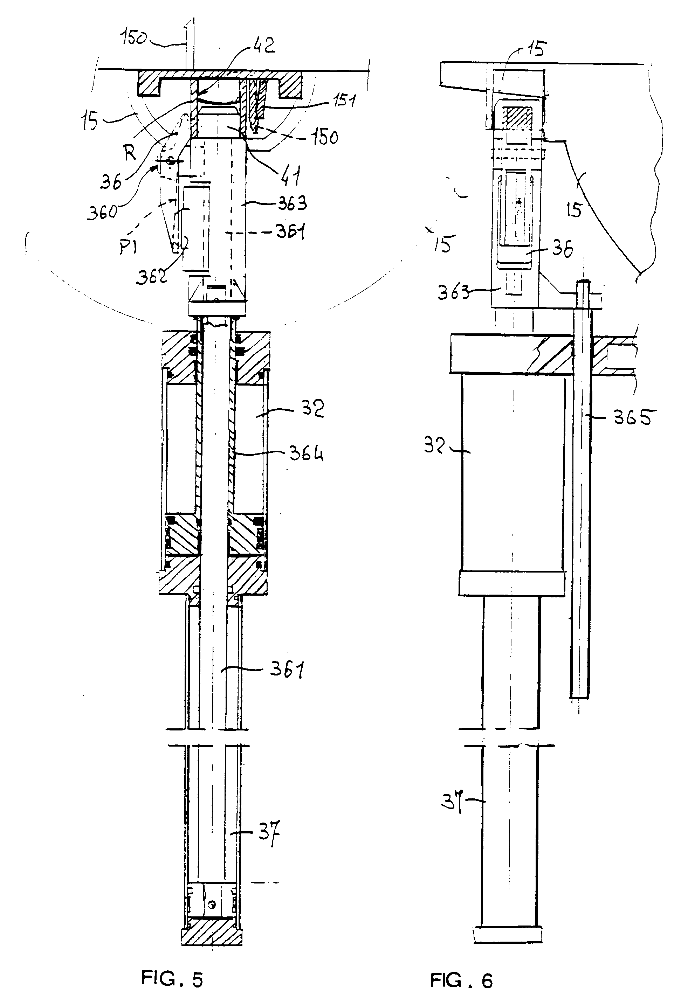

In a per se known manner, said semi-cylindrical sleeves comprise elements for mutual snap-together connection, constituted by elastically yielding undercut teeth 150 which are carried by the sleeves of each hemisphere and cooperate with retention ridges 151 defined in the sleeves of the facing hemisphere (figure 5).

The magazines 16,17 are delimited by respective pairs of opposite parallel guides 20,21 which are advantageously coated with a material having a very low coefficient of friction, for example self-lubricating polymeric material, and are intended to engage and guide the opposite semi-cylindrical sleeves of each hemisphere of the respective stack; said hemispheres are stored in the stack with their convex portion directed downwardly.

Opposite retractable engagement elements 30,31 are provided at the side of the guides 20,21 in order to support the hemispheres in the stack; said opposite engagement elements engage, in an active position, the edge of the respective hemisphere, which is released when said engagement elements retract by being actuated inward by respective electromagnetic or fluid-activated actuators 130.

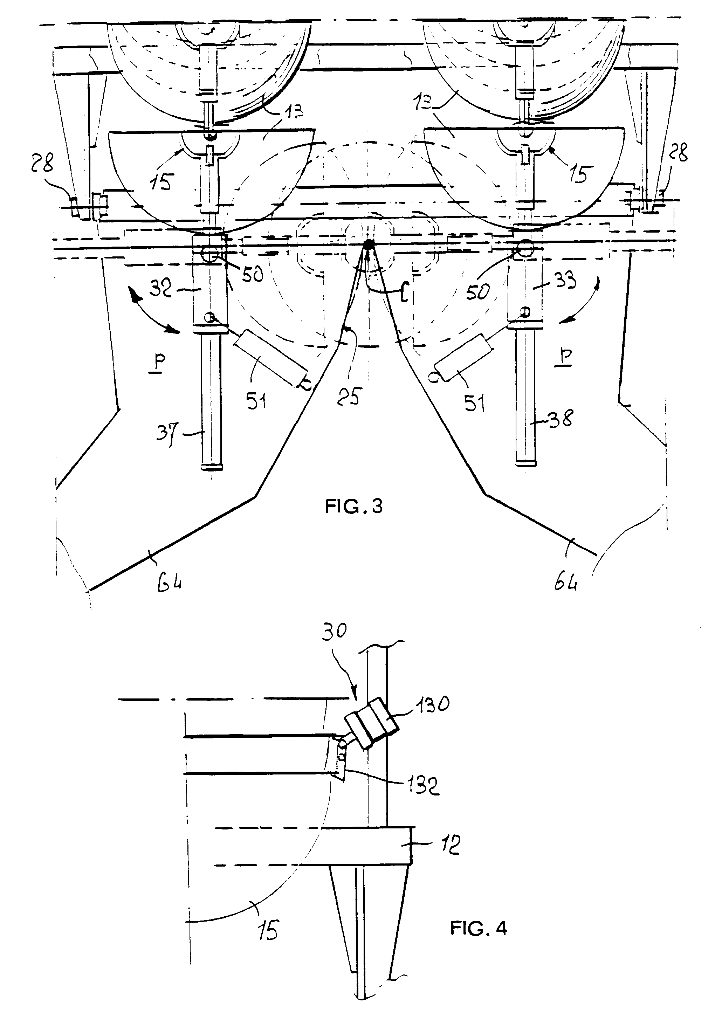

As clearly shown in the detail of figure 4, the engagement elements 30 are constituted by an oscillating pawl 132 which has two tooth-shaped ends, respectively a lower end and an upper end; the upper tooth-shaped end is provided in order to support the overlying hemisphere when the underlying end is released.

A lower operating head 29 is articulated to the base frame 12 by means of pivots 28 and has, in alignment with the guides 20,21, first pairs of fluid-activated grip jacks 32,33 for actuating respective grip fingers 36 which are adapted for gripping raised portions R defined on the sleeves 15 of the hemispheres 13.

Second pairs of pusher jacks 37,38 are arranged coaxially to the jacks 32,33, and their stems each pass through an axial cavity of the stem of the respective grip jack 32,33. Each of the stems of the pusher jacks has a removable head 41 (figure 5) which is adapted for engaging corresponding seats 42 defined on the sleeves 15 by the raised portions R. The terminal heads 41 cooperate with the fingers 36 in gripping the sleeves and also serve to push each sleeve into a snap-together coupling engagement with the corresponding sleeve of a facing hemisphere so as to form the marker ball P.

As clearly illustrated in figures 5 and 6, each grip finger 36 is rigidly associated in an oscillating manner with a lug 360 supported by the stem 361 of the related pusher jack 37. Said finger is provided with an inclined plane PI (illustrated in broken lines) with which there cooperates, in order to close said finger, the raised portion 362 of a sleeve 363 slidingly fitted on the stem 361 and rigidly associated with the hollow stem 364 of the respective grip jack. A rod 365, which is slideable in a head plate of the grip jack, is rigidly rotationally associated with the sleeve 363.

The pairs of coaxial jacks 32,37 and 33,38 are rotatably supported about retention pivots 50 and are subjected to the action of fluid-activated actuation elements 51 which are adapted for turning them over from the extraction position into a hemisphere placement position (illustrated in broken lines in the figure) which is rotated by 90° with respect to the first one.

In said placement position, the hemispheres face one another and are arrangeable on opposite sides with respect to an aerial cable C, which in a per se known manner, as described in said prior patent application, abuts -- when the structure is positioned on said aerial cable -- at the vertex of an opening 25 which is shaped like an inverted V and is defined on opposite walls p of the operating head 29; the vertex of the opening 25 is arranged at the diametrical axis of the positioned hemispheres. The hemispheres are placed by extending the pusher jacks 37,38 after releasing the grip jacks 32,33.

It should be noted that the replacement of the terminal heads 41 with an appropriate tool (not illustrated), for example a head with three or more points, allows to exploit the extension of the pusher jacks to remove old marker balls by splitting them. This operation naturally occurs by preparing beforehand the device on the ground and moving it into operating position with empty magazines. All the jacks of the device are preferably pneumatic and are preferably supplied by a flow of compressed air fed from the turbine of the helicopter engine and stabilized at a value of approximately 3 bar.

The operating head 29, in which the center of gravity of the entire device is located, extends with a four-footed structure which is composed of hollow divaricated uprights 64 which, besides being used for the static support of the device on the ground, define a guiding channel for the cable C which blends with the inverted-V opening 25.

For the purpose of electrical insulation, the uprights 64 are made of reinforced polymeric material, for example epoxy resin reinforced with glass fibers, and by means of this refinement it is possible to use the device even on live power lines, since the forming of discharge arcs between the four-footed structure and the cables of the line is avoided.

A television camera T is provided in the cavity of one of the uprights, and its lens is constantly aimed at the vertex of the opening 25 which is intended to receive the cable C. The signals of the television camera are relayed and displayed on a video monitor arranged in the cabin of the helicopter.

The ability of the operating head 29 to oscillate with respect to the structure 11 allows to adapt said head to the inclination of the cable C, which as is known arranges itself in a catenary curve between two successive poles. An orientation jack 60 is provided in order to perform the controlled rotation of the head through a maximum angle of 45°, which approximately corresponds to the maximum inclination which the cables of a generic aerial line can assume.

In order to allow the head 29 to arrange itself inclined and not slide on the cable C, there is a clamp 65 for clamping said cable. The clamp 65, which is formed by jaws preferably covered with a material having a high coefficient of friction, is arranged on one side of the head and is aligned with the vertex of the inverted-V opening 25. An electromagnetic or fluid-activated closure element 66 closes or loosens the jaws under the control of the operator.

Without altering the concept of the invention, the details of execution and the embodiments may naturally be varied extensively, with respect to what has been described and illustrated by way of non-limitative example, without thereby abandoning the scope of the invention.

In particular, the supports 30,31 for supporting the hemispheres can be movable instead of being static; for example, they can be carried by continuous chains which move in a stepwise manner, actuated by an electric or fluid-activated motor, releasing each hemisphere after the sleeves have been engaged by the grip elements 36.

It is equally evident that the fluid-activated grip and pusher jacks may be replaced with corresponding electric and/or electromagnetic actuators which are straightforward to design for the technician.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Improved device (10) for automatically placing, by means of helicopters, marker balls on aerial lines, the device (10) comprising a structure (11,12) suspendable from a helicopter and being provided with at least two vertically facing magazines (16,17), each magazine being adapted for containing a respective stack of hemispheres (13) provided with end sleeves (15), for composing a corresponding plurality of marker balls, the device (10) further comprising active means for extracting the hemispheres (13) from the respective stacks and for placing them by means of a 90° rotation in opposite directions in order to arrange said hemispheres (13) so that they face each other on their concave sides; and active means for mutually coupling together the facing hemispheres.

2. Device according to claim 1, characterized in that said active means comprise first pairs of oscillatable fluid-activated grip jacks (32,33) for the actuation of elements (36) for gripping the sleeves (15) of each hemisphere (13), which cooperate with second pairs of coaxial pusher jacks (37,38), the pairs of said first and second coaxial jacks being rotatable in opposite directions so as to turn over, after the retraction of their stems, the gripped hemispheres (13), arrange them facing one another and connect them by pressing them against one another by virtue of the subsequent controlled extension of pusher jacks (37,38) and after the release of the grip jacks (32,33).

3. Device according to claim 2, characterized in that said grip jacks (32,33) actuate, with the end of their respective stems (364), grip elements (36) constituted by movable fingers (36) which are adapted for clamping raised portions (R) provided on the sleeves (15) of the hemispheres (13).

4. Device according to claim 3, characterized in that the stems (361) of the pusher jacks (37,38) pass and are freely slidable within cavities of the stems (364) of the respective grip jacks (32,33) and are provided with a removable pusher head (41) and with a lug (360) for the articulation of the grip finger (36), and in that said finger is provided with an inclined plane (PI) with which there cooperates, in order to close said finger, the raised portion (362) of a sleeve (363) which is slidingly fitted on the stem (361) of the pusher jack (37,38) and is rigidly associated with the stem (364) of the grip jack (32,33).

5. Device according to claim 4, characterized in that the removable head (41) can be replaced with a pointed tool suitable for removing existing marker balls by splitting them as a consequence of the extension of the pusher jacks (37,38).

6. Device according to any one of claims 2, 3, 4 or 5, characterized in that it comprises a metallic cage-like structure (11) with a base frame (12) to which a lower orientatable operating head (29) is articulated, said head (29) bearing active means for gripping, placing and coupling the hemispheres (13) and being controlled by an orientation jack (60).

7. Device according to claim 6, characterized in that said operating head comprises opposite walls which have an opening (25) in the shape of an inverted V, at the vertex of which an aerial cable (C) can abut when the structure is arranged on said cable, and in that said vertex of said opening is arranged at the axis of the placed hemispheres.

8. Device according to claim 7, characterized in that the operating head extends with a four-footed supporting structure the uprights (64) of which are radiused with the inverted-V opening (25).

9. Device according to claim 8, characterized in that the uprights (64) of the four-footed structure are hollow and preferably made of reinforced polymeric material.

10. Device according to claim 9, characterized in that a television camera (T) is accommodated in the cavity of the uprights, the lens of said camera being aimed at the vertex of said inverted-V opening (25), the signals of the television camera (T) being relayed and displayed on a video monitor arranged in the cabin of the helicopter.

11. Device according to claim 7, characterized in that the operating head bears a controlled clamp (65) for clamping the placement cable, said clamp (65) being arranged on one side of said head in alignment with the vertex of the inverted-V opening (25) and being formed by jaws which are controlled by an actuation element (66) for closure and opening.

12. Device according to any one of claims 2 to 11, characterized in that said fluid-activated jacks are pneumatic and are preferably powered by a flow of compressed air fed from the turbine of the helicopter engine.

## Patentansprüche

1. Verbesserte Einrichtung (10) zur automatischen Montage von Warnkugeln mittels Hubschrauber auf Freileitungen,
wobei die Einrichtung (10) aus einem an einem Hubschrauber aufhängbaren Gebilde (11,12) besteht, das mindestens zwei lotrechte, einander gegenüberstehende Magazine (16,17) aufweist, die jeweils geeignet sind, einen entsprechenden Stapel von mit Stirnflanschen (15) versehenen Halbkugeln (13) aufzunehemen um eine entsprechende Vielzahl von Warnkugeln zu bilden,
wobei die Einrichtung ferner Betätigungseinrichtungen aufweist, die zum Herausziehen der Halbkugeln (13) aus den entsprechenden Stapeln, zum Anordnen der Halbkugeln (13) in einander entgegengesetzten Richtungen durch eine Drehung um 90° derart, daß die Halbkugeln (13) mit ihren konkaven Seiten einander gegenüberstehen und zur gegenseitigen Verbindung der Halbkugeln (13) dienen.

2. Einrichtung nach Anspruch 1, **dadurch gekennzeichnet**, daß die Betätigungseinrichtungen aus ersten Paaren schwenkbarer, fluidbetätigter Greifzylinder (32,33) zur Betätigung von Gliedern (36) zum Ergreifen der Stirnflanschen (15) jeder Halbkugel (13) bestehen, die mit zweiten Paaren koaxialer Stoßzylinder (37,38) zusammenwirken, daß die Paare der ersten und zweiten Greif-bzw. Stoßzylinder in entgegengesetzten Richtungen schwenkbar sind, derart, daß sie nach dem Zurückziehen ihrer Stößel die ergriffenen Halbkugeln (13) umdrehen, sie einander gegenüberstellen und miteinander verbinden, indem sie gegeneinander mittels eines darauf folgenden gesteuerten Hubes der Stoßzylinder (37,38) und nach Freigabe der Greifzylinder (32,33) zusammengepreßt werden.

3. Einrichtung nach Anspruch 2, **dadurch gekennzeichnet**, daß die Greifzylinder (32,33) mit den Enden ihrer Stößel (364) Greifglieder (36) betätigen, die aus beweglichen Fingern (36) bestehen, die geeignet sind, angehobene Teile (R) an den Stirnflanschen (15) der Halbkugeln (13) zu ergreifen.

4. Einrichtung nach Anspruch 3, **dadurch gekennzeichnet**, daß die Stößel (361) der Stoßzylinder (37,38) frei gleitbar durch Bohrungen der Stößel (364) der jeweiligen Greifzylinder (32,33) gehen und mit einem abnehmbaren Stoßkopf (41) und einem Lagerohr (360) zur Anlenkung des Greiffingers (36) versehen sind und daß der Greiffinger eine geneigte Ebene (PT) aufweist, mit der ein angehobener Teil (362) einer Büchse (363) zum Schließen des Greiffingers zusammenwirkt, die gleitbar auf dem Stößel (361) des Stoßzylinders (37,38) sitzt und starr mit dem Stößel (364) des Greifzylinders (32,33) verbunden ist.

5. Einrichtung nach Anspruch 4, **dadurch gekennzeich****net**, daß der abnehmbare Stoßkopf (41) ersetzbar ist durch ein spitzes Werkzeug, das geeignet ist, vorhandene Warnkugeln durch Aufspalten zu entfernen wenn die Stoßzylinder (37,38) ausgefahren werden.

6. Einrichtung nach einem der Ansprüche 2,3,4 oder 5, **dadurch gekennzeichnet,** daß sie ein metallisches, käfigartiges Gebilde (11) mit einem Grundgestell besitzt,an dem ein unterer, ausrichtbarer Arbeitskopf (29) von einem Arbeitszylinder gesteuerte Betätigungsglieder zum Ergreifen, in Stellung bringen und Verbinden der Halbkugeln (13) aufweist.

7. Einrichtung nach Anspruch 6, **dadurch gekennzeichnet,** daß der Arbeitskopf einander gegenüberstehende Wände mit einer Öffnung (25) in der Form eines umgekehrten V aufweist, daß am Scheitel der Öffnung eine Freileitung (C) anstoßen kann, wenn die Einrichtung auf der Freileitung angeordnet ist und daß der Scheitel der Öffnung auf der Achse der in Stellung gebrachten Halbkugeln angeordnet ist.

8. Einrichtung nach Anspruch 7, **dadurch gekennzeichnet**, daß der Arbeitskopf sich auf einem vierbeinigen Grundgestell erstreckt, dessen Beine (64) zur umgedrehten V-Öffnung (25) radial stehen.

9. Einrichtung nach Anspruch 8, **dadurch gekennzeichnet**, daß die Beine (64) des vierbeinigen Grundgestells hohl sind und vorzugsweise aus einem verstärkten Polymer-Werkstoff bestehen.

10. Einrichtung nach Anspruch 9, **dadurch gekennzeichnet**, daß im Hohlraum eines Beines eine Fernsehkamera untergebracht ist, deren Linse auf den Scheitel der umgekehrten V-Öffnung (25) gerichtet ist und daß die Signale der Fernsehkamera (T) auf einen Videomonitor in der Kabine des Hubschraubers übertragen und dort dargestellt werden.

11. Einrichtung nach Anspruch 7, **dadurch gekennzeichnet**, daß der Arbeitskopf ein gesteuertes Klemmorgan (65) zum Anklemmen an der Freileitung aufweist, daß das Klemmorgan (65) an einer Seite des Arbeitskopfes fluchtend mit dem Scheitel der umgekehrten V-Öffnung (25) angeordnet und aus Backen gebildet ist, die von einem Betätigungsglied (66) zum Schließen und Öffnen gesteuert werden.

12. Einrichtung nach einem der Ansprüche 2 bis 11, **dadurch gekennzeichnet**, daß die fluidbetätigten Zylinder pneumatisch sind und vorzugsweise von einem Druckluftstrom, gespeist von der Turbine des Hubschraubermotors, beaufschlagt sind.

## Revendications

1. Dispositif amélioré (10) pour placer automatiquement, au moyen d'hélicoptères, des balises sur des lignes aériennes, le dispositif (10) comprenant une structure (11,12) pouvant être suspendue à un hélicoptère et étant munie d'au moins deux magasins se faisant face verticalement (16,17), chaque magasin étant adapté pour contenir une pile respective d'hémisphères (13) munis de manchons d'extrémité (15), pour constituer une pluralité correspondante de balises, le dispositif (10) comprenant de plus des moyens actifs pour extraire les hémisphères (13) des piles respectives et les placer au moyen d'une rotation de 90° dans des sens opposés de façon à agencer lesdits hémisphères (13) de sorte qu'ils se font face sur leurs faces concaves ; et des moyens actifs pour coupler mutuellement ensemble les hémisphères se faisant face.

2. Dispositif selon la revendication 1,
caractérisé en ce que lesdits moyens actifs comprennent des premières paires de vérins de préhension actionnés par fluide pouvant osciller (32,33) pour l'actionnement d'éléments (36) pour saisir les manchons (15) de chaque hémisphère (13), qui coopèrent avec de secondes paires de vérins de poussée coaxiaux (37,38), les paires desdits premiers et seconds vérins coaxiaux pouvant tourner dans des sens opposés de façon à tourner, après la rétraction de leur tige, les hémisphères saisis (13), les agencer en se faisant face l'un vers l'autre et les relier en les pressant l'un contre l'autre grâce à l'extension commandée subséquente des vérins de poussée (37,38) et après la libération des vérins de préhension (32,33).

3. Dispositif selon la revendication 2,
caractérisé en ce que lesdits vérins de préhension (32,33) actionnent, avec l'extrémité de leurs tiges respectives (364), les éléments de préhension (36) constitués par des doigts mobiles (36) qui sont adaptés pour serrer des parties soulevées (R) prévues sur les manchons (15) des hémisphères (13).

4. Dispositif selon la revendication 3,
caractérisé en ce que les tiges (361) des vérins de poussée (37,38) passent et peuvent librement coulisser à l'intérieur de cavités des tiges (364) des vérins de préhension respectifs (32,33) et sont munies d'une tête de poussée amovible (41) et d'une patte (360) pour l'articulation du doigt de préhension (36), et en ce que ledit doigt est muni d'un plan incliné (PI) avec lequel coopère, de façon à fermer ledit doigt, la partie soulevée (362) d'un manchon (363) qui est monté de façon coulissante sur la tige (361) du vérin de poussée (37,38) et est rigidement associé à la tige (364) du vérin de préhension (32,33).

5. Dispositif selon la revendication 4,
caractérisé en ce que la tête amovible (41) peut être remplacée par un outil pointu approprié pour retirer des balises existantes en les séparant en conséquence de l'extension des vérins de poussée (37,38).

6. Dispositif selon l'une quelconque des revendications 2, 3, 4 ou 5,
caractérisé en ce qu'il comprend une structure métallique en forme de cage (11) avec un châssis de base (12) auquel est articulée une tête d'actionnement inférieure orientable (29), ladite tête (29) portant des moyens actifs pour saisir, placer et coupler les hémisphères (13) et étant commandée par un vérin d'orientation (60).

7. Dispositif selon la revendication 6,
caractérisé en ce que ladite tête d'actionnement comprend des parois opposées qui présentent une ouverture (25) sous la forme d'un V renversé, au sommet duquel un câble aérien (C) peut venir en aboutement quand la structure est agencée sur ledit câble, et en ce que ledit sommet de ladite ouverture est agencé au niveau de l'axe des hémisphères placés.

8. Dispositif selon la revendication 7,
caractérisé en ce que la tête d'actionnement s'étend par une structure de support à quatre pieds, dont les montants (64) rayonnent par rapport à l'ouverture en V renversé (25).

9. Dispositif selon la revendication 8,
caractérisé en ce que les montants (64) de la structure à quatre pieds sont creux et réalisés, de préférence, en une matière polymère renforcée.

10. Dispositif selon la revendication 9,
caractérisé en ce qu'une caméra de télévision (T) est reçue dans la cavité des montants, la lentille de ladite caméra étant dirigée vers le sommet de ladite ouverture en V renversé (25), les signaux de la caméra de télévision (T) étant relayés et affichés sur un moniteur vidéo agencé dans la cabine de l'hélicoptère.

11. Dispositif selon la revendication 7,
caractérisé en ce que la tête d'actionnement porte une pince commandée (65) pour pincer le câble de placement, ladite pince (65) étant agencée sur un côté de ladite tête en alignement avec le sommet de l'ouverture en V renversé (25) et étant formée par des mâchoires qui sont commandées par un élément d'actionnement (66) pour la fermeture et l'ouverture.

12. Dispositif selon l'une quelconque des revendications 2 à 11,
caractérisé en ce que lesdits vérins actionnés par fluide sont pneumatiques et alimentés de préférence par un flux d'air comprimé provenant de la turbine du moteur de l'hélicoptère.
